# EUROPEAN PATENT APPLICATION

(11) **EP 1 770 496 A2**
(43) Date of publication of application: **04.04.2007**
(21) Application number: 06253109.0
(22) Date of filing: 15.06.2006
(51) Int. Cl.: G06F 3/06

(54) **Image forming apparatus**

(30) Priority: 16.09.2005 JP 2005270904
(71) Applicant: KONICA MINOLTA BUSINESS TECHNOLOGIES, INC., Tokyo 100-0005 (JP)
(72) Inventor: Haga Tatsuyoshi c/o Konika Minolta, Hachioji-shi, Tokyo 192-8505 (JP)
(74) Representative: Roberts, Mark Peter

(57) **Abstract**

There is described an image forming apparatus, which includes: a hard disc drive to store consecutive image data into a physically-continuous region on a hard disc; and a controlling section to control data accessing operation for said hard disc drive in such a manner that, with regard to at least a write processing and a read processing if said hard disc drive commences said write processing or said read processing, said data accessing operation for said write processing or said read processing is continued until a predetermined size of data is written onto said hard disc or read from said hard disc.

## Description

This application is based on Japanese Patent Application No. 2005-270904 filed on September 16, 2005 in Japanese Patent Office, the entire content of which is hereby incorporated by reference.

### BACKGROUND OF THE INVENTION

The present invention relates to an image forming apparatus for storing image data into a hard disc, particularly to a technique of avoiding reduction in accessing efficiency if there is contention between read processing and write processing.

An image forming apparatus such as a digital copying machine generally utilizes a hard disk apparatus to store image data, since the hard disk apparatus provides high-volume storage at a lower cost.

However, the hard disk apparatus is required to move a head to an intended destination on the disk for reading and writing data or to wait for rotation until an intended sector is located immediately below the head. This makes the access rate lower than that when a semiconductor memory is used.

Various techniques have been therefore proposed to ensure effective data read/write operations in the hard disk apparatus. In one of these techniques, for example, the physical access position on a disk is directly specified to allow a series of image data to be stored into a continuous region on the disk, in such a manner that the frequency of head movement is reduced and access efficiency is improved. Normally, when a file system is used, the physical storage location on a disk cannot be specified from an application. However, there is an image processing apparatus (e.g. Patent Document 1) wherein a file system is provided with the function of storing a continuous region for one image page on the disk, whereby the image data can be stored in the continuous region when the file system is used.
[Patent Document 1]
   Tokkai 2002-29101 (Japanese Non-Examined Patent Publication)

In some of the digital copying machines, a read operation and a printout operation are processed in parallel at the same time; wherein, in the read operation, the image data obtained by reading a document with a scanner and the image data transferred from an external device via an interface are stored sequentially into the hard disk apparatus; while, in the printout operation, the stored page image data is read out sequentially from the hard disk apparatus and is outputted to a printing section. In this case, the write processing involved in the read operation and the read processing involved in the printout operation must be carried out concurrently. The hard disk apparatus can handle either the read or write operation at one time. This requires frequent switching between read processing and write processing.

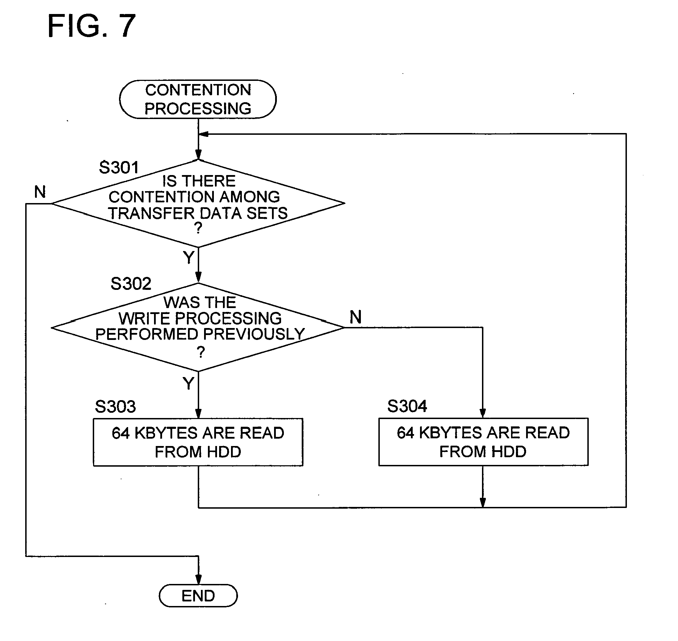

As shown in Fig. 7, when read processing and write processing have occurred concurrently and there is contention between two transfer data sets (Y in Step S301), a check is made to see if write processing or read processing (Step S302) was performed in the previous access. If write processing was performed (Y in Step S302), read processing for a maximum transfer unit (64 Kbytes) for the hard disk apparatus is performed this time (Step 303). If read processing was performed in the previous access (N in Step S302), control is provided to ensure that the write processing for a maximum transfer unit is performed this time (Step 303). In this manner, the read processing and write processing are switched alternately for each maximum transfer unit, according to the conventional technique.

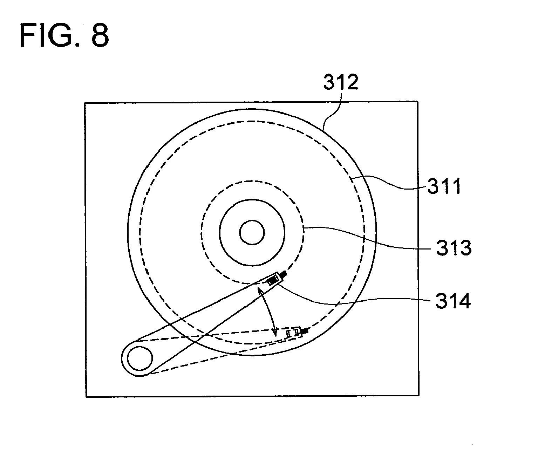

Even if a series of image data is stored in the physically continuous region on a disk, frequent switching between the read and write processing causes frequent head movement and this reduces access efficiency. This is because the physically continuous region for storing the image data related to read processing is separated from that related to write processing. For example, as shown in Fig. 8, when the image data storage location 311 related to read processing is located close to the outer periphery of the disk 312, and the image data storage location 313 related to write processing is located near the center of the disk 312, the head 314 moves a great distance on the disk 312 at every switching of the read processing and write processing, even if each of the image data sets is stored physically continuous region of the disk. This has reduced the access efficiency and has deteriorated the performance such as copying operation. Such a problem was left unsolved in the conventional techniques.

### SUMMARY OF THE INVENTION

To overcome the abovementioned drawbacks in conventional image forming apparatus, it is an object of the present invention to provide an image forming apparatus, which makes it possible to improve the performance of the apparatus by preventing the deterioration of the accessing efficiency of the hard disc apparatus (hereinafter, also referred to as a hard disc drive) when there is contention between read processing and write processing.

Accordingly, to overcome the cited shortcomings, the abovementioned object of the present invention can be attained by image forming apparatus described as follow.

An image forming apparatus, comprising
a hard disc drive to store consecutive image data into a physically-continuous region on a hard disc; and
a controlling section to control data accessing operation for said hard disc drive in such a manner that, with regard to at least a write processing and a read processing if said hard disc drive commences said write processing or said read processing, said data accessing operation for said write processing or said read processing is continued until a predetermined size of data is written onto said hard disc or read from said hard disc;
wherein said predetermined size is established for every task for accessing said hard disc drive.

An image forming apparatus, comprising
a hard disc drive to store consecutive image data into a physically-continuous region on a hard disc; and
a controlling section to control data accessing operation for said hard disc drive in such a manner that, if said hard disc drive commences a write processing, said data accessing operation for said write processing is continued until a first predetermined size of data is written onto said hard disc, while, when said hard disc drive commences a read processing, said data accessing operation for said read processing is continued until a second predetermined size of data is read from said hard disc;
wherein said first predetermined size and said second predetermined size are respectively established for said write processing use and for said read processing use.

An image forming apparatus, comprising
a hard disc drive to store consecutive image data into a physically-continuous region on a hard disc; and
a controlling section to control data accessing operation for said hard disc drive in such a manner that, with regard to at least a write processing and a read processing if said hard disc drive commences said write processing or said read processing, said data accessing operation for said write processing or said read processing is continued until a predetermined size of data is written onto said hard disc or read from said hard disc;
wherein said predetermined size is changeable.

An image forming apparatus, comprising
a hard disc drive to store consecutive image data into a physically-continuous region on a hard disc;
an inputting section to input said consecutive image data;
a storage section to store said consecutive image data inputted from said inputting section; and
a controlling section to control data accessing operation for said hard disc drive in such a manner that, with regard to at least a write processing and a read processing if said hard disc drive commences said write processing or said read processing, said data accessing operation for said write processing or said read processing is continued until a predetermined size of data is written onto said hard disc or read from said hard disc;
wherein said predetermined size exceeds a maximum transferable size, which is defined as a maximum data size being transferable at a time from said storage section to said hard disc drive.

### BRIEF DESCRIPTION OF THE DRAWINGS

Embodiments will now be described, by way of example only, with reference to the accompanying drawings which are meant to be exemplary, not limiting, and wherein like elements are numbered alike in several Figures, in which:
Fig. 1 shows an electrical schematic structure of an image forming apparatus as an embodiment of the present invention;
Fig. 2 is a flowchart showing the control of access to a hard disk apparatus, conducted by the image forming apparatus embodied in the present invention;
Fig. 3(a) and Fig. 3(b) schematically show the access to a hard disk apparatus when there is contention between the read and write processing;
Fig. 4 shows the result of measuring the transfer rate for various continuous transfer sizes, as an example;
Fig. 5 is an explanatory diagram showing an example of the priority setting screen to be displayed on an operating section of an image forming apparatus embodied in the present invention;
Fig. 6 shows a flowchart of access control when a continuous transfer size is changed in response to a free-space capacity of a buffer memory;
Fig. 7 shows a flowchart of a conventional access control when there is contention between the read and write processing; and
Fig. 8 is an explanatory diagram showing an example of moving state of a read/write head when a read processing and a write processing are alternately conducted.

### DETAILED DESCRIPTION OF THE PREFERRED EMBODIMENT

Referring to the drawing, the following describes the embodiments of the present invention:

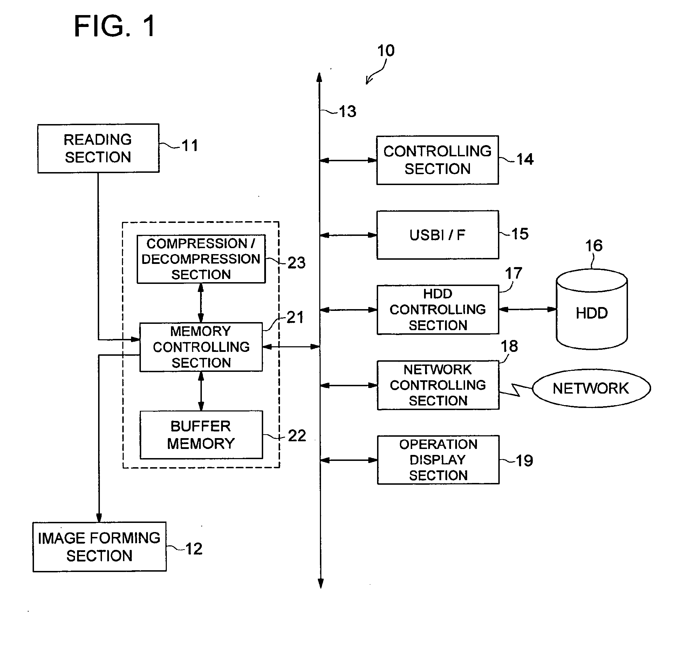

Fig. 1 shows an electrical schematic structure of an image forming apparatus 10 as an embodiment of the present invention. The image forming apparatus 10 is designed as a digital copying machine to perform copying operations for reading a document, forming the copied image thereof on a recording sheet and outputting it. It is provided with a reading section 11 for reading the document and an image forming section 12 for forming an image on the recording sheet according to the image data.

The reading section 11 is provided with:
a light source for applying light to the document;
a line image sensor for reading one line of the document across the width;
a moving section for moving the reading position for each line along the length; and
an optical path of a lens or mirror for leading the light reflected from the document, to the line image sensor so as to form an image. The line image sensor is constituted by a charge coupled device (CCD).

The analog image signal outputted from the line image sensor is subjected to analog-to-digital conversion and is outputted as a digital image data.

The image forming section 12 includes a recording paper conveyance section, photoconductor drum, electrical charger, a laser unit, a development apparatus and a transfer/detaching apparatus a cleaning section, and a fixing section. It is designed as a laser based printer engine for forming an image on the recording paper by the electrophotographic process.

In addition to these units, the image forming apparatus 10 has a system bus 13, which is connected with a controlling section 14 for overall control of the operations of the apparatus; a USB (Universal Serial Bus) interface 15 connected with a USB device such as a USB memory; an HDD controlling section 17 for controlling data read/write operations using the hard disk apparatus 16, a network controlling section 18 for communication with an external terminal via the network, an operation display section 19, a memory controlling section 21.

The controlling section 14 is made of such major components as a CPU (Central Processing Unit), a flash memory and a RAM (Random Access Memory). A magnetic disk apparatus capable of storing a large volume of data is used as the hard disk apparatus 16. A hard disk apparatus of other configuration such as a photomagnetic disk can also be utilized.

The operation display section 19 is equipped with a liquid crystal display, a touch panel formed on the surface thereof and other operation switches. Various operation screens, guide screens and alarm screens are displayed on the liquid crystal display. It is designed to accept various instructions from the user through the touch panel and output switch.

A buffer memory 22 for temporary storage of image data and a compression/decompression section 23 for compression and decompression of image data are connected under the control of the memory controlling section 21. A semiconductor memory for high-rate access is used as the buffer memory 22.

The memory controlling section 21 performs the functions of writing and reading the image data using the buffer memory 22, and controlling the input and output operations using the compression/decompression section 23. The image data outputted by the reading section 11 is inputted into the memory controlling section 21. The image forming section 12 is supplied with the image data for printout from the memory controlling section 21.

The copying operation in the image forming apparatus 10 of such a structure is achieved by the read operation and printout operation; wherein, in the step of the read operation, the image data obtained from the document read by the reading section 11 is read sequentially into the hard disk apparatus 16, while in the step of in the printout operation, the image data of the page already stored is sequentially from the hard disk apparatus 16 and is outputted into the image forming section 12.

In the read operation, the image data obtained from the document read by the reading section 11 is compressed by the compression/decompression section 23 and is then stored in the buffer memory 22. After that, the compressed image data is stored in the hard disk apparatus 16 through the memory controlling section 21 and HDD controlling section 17.

In the printout operation, the image data read from the hard disk apparatus 16 is stored in the buffer memory 22 through the HDD controlling section 17 and memory controlling section 21. After that, the image data is decompressed by the compression/decompression section 23 and is stored in the buffer memory 22. The image data having been decompressed is sequentially outputted to the image forming section 12 through the memory controlling section 21 from the buffer memory 22.

The image forming apparatus 10 performs the read/write operations using the hard disk apparatus 16 through direct management of the physically storage location (sector) on the disk, without using a file system. It uses the method of storing the one-page image data in the continuous region on the disk. When the image data over a plurality of pages is to be stored in one job, the image data of the next page is stored in the region continued from the previous page, wherever possible.

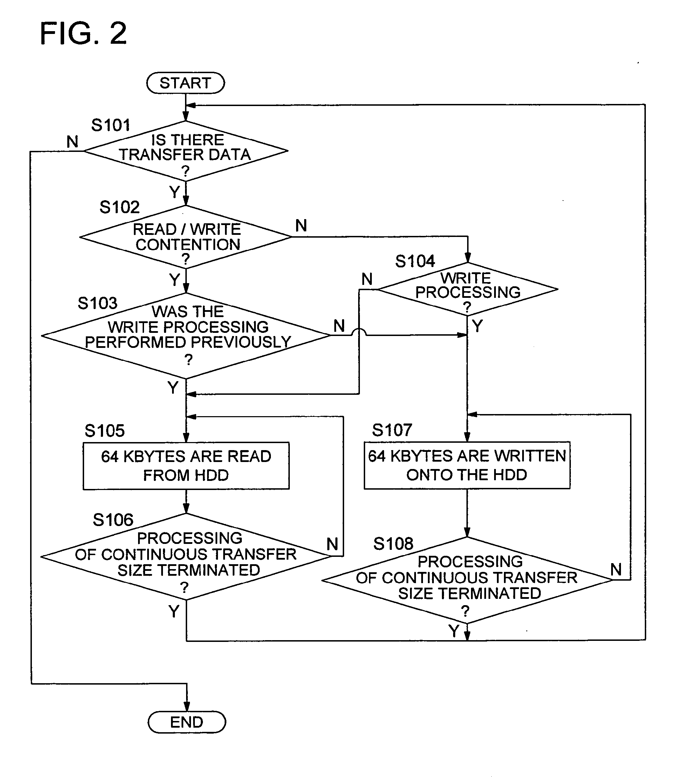

Fig. 2 is a flowchart showing the control of access to the hard disk apparatus 16 provided by the image forming apparatus 10. The controlling section 14 checks whether or not there is image data to be transferred between the buffer memory 22 and hard disk apparatus 16 (Step S101). "There is image data to be transferred" when more than a predetermined amount of compressed image data is already loaded in the buffer memory 22 in the read operation at the time of copying, and a write request has been issued for storing the image data in the hard disk apparatus 16, or when a read request has been issued for reading the image data from the hard disk apparatus 16 in the printout operation at the time of copying operation, for example.

If there is image data to be transferred (Y in Step S101), a decision step is taken to determine whether or not both read and write requests have been made and contention has occurred (Step S102). If contention has occurred (Y in Step S102), a decision step is taken to determine if the previously performed operation is the write processing for writing data into the hard disk apparatus 16 or the read processing for reading data from the hard disk apparatus 16 (Step S103). If the write processing was performed in the previous operation (Y in Step S103), the read processing is performed this time (Step S105). If the read processing was performed in the previous operation (N in Step S103), the write processing is performed this time (Step S107). To put it another way, if there is contention, the read and write operations are carried out alternately.

Once the read or write processing starts, the read or write processing is allowed to occupy the access to the hard disk apparatus 16, until the read or write operation of a predetermined continuous transfer size terminates. The continuously transfer size is set to the size exceeding the maximum transfer unit (64 Kbytes in this case) that can be transmitted in one transfer operation to the hard disk apparatus 16 by the HDD controlling section 17. In this case, it is set to a value equivalent to N times (N denoting an integer of 2 or more) the maximum transfer unit. The maximum transfer size is determined by the code of HDD controlling section 17.

To put it more specifically, the operation of allowing the access to be occupied is performed as follows: In read processing, the read operation of 64 Kbytes -- the maximum transfer unit for the hard disk apparatus 16 -- 16 is performed (Step S105). A check is made to see whether or not the total amount of the transfer data has reached the level of the continuous transfer size (Step S106). If it has not yet reached that level (N in Step S106), the read operation of 64 Kbytes as the maximum transfer unit is performed again (Step S105). If the total amount of the transfer data has exceeded the continuous transfer size (Y in Step S106), the read processing is interrupted once and the system returns to the step S101.

Similarly, if the write processing has started, the write operation of 64 Kbytes as the maximum transfer unit for the hard disk apparatus 16 is performed (Step S107). If the total of the transfer data is less than the continuous transfer size (N in Step S108), the write operation of 64 Kbytes as the maximum transfer unit is performed again (Step S107). If the total amount of the transfer data has exceeded the continuous transfer size (Y in Step S108), the write processing is interrupted once and the system returns to the step S101.

If there is data to be transferred (Y in Step S101) without contention between read processing and write processing (N in Step S102), a check is made to see whether or not the data to be transferred is related to the write processing (Step S104). If the data to be transferred is related to the write processing (Y in Step S104), the write processing is executed on an exclusive basis until the write operation of the continuous transfer size terminates (Step S107 and N in Step S108). After that, the write processing is terminated once and the system returns to the step S101. If the data to be transferred is related to the read processing (N in Step S104), the read processing is executed on an exclusive basis until the read operation of the continuous transfer size terminates (Step S105 and N in Step S106). After that, the read processing is terminated once and the system returns to the step S101.

If there is no more data to be transferred (N in Step S101), processing terminates (END).

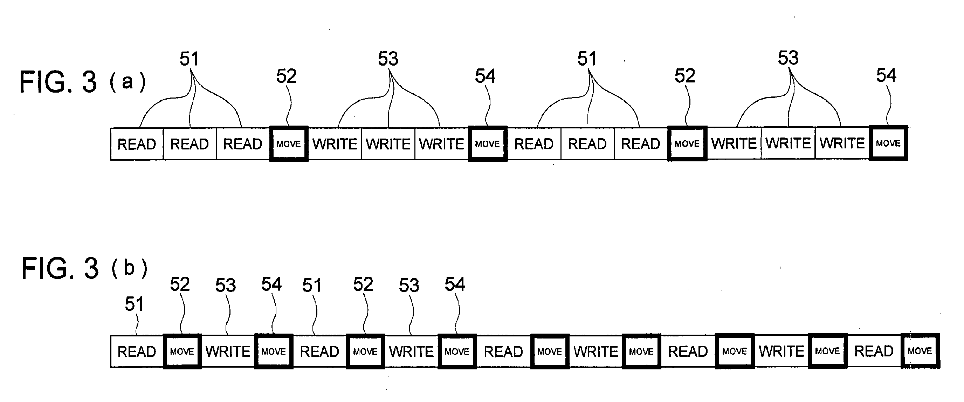

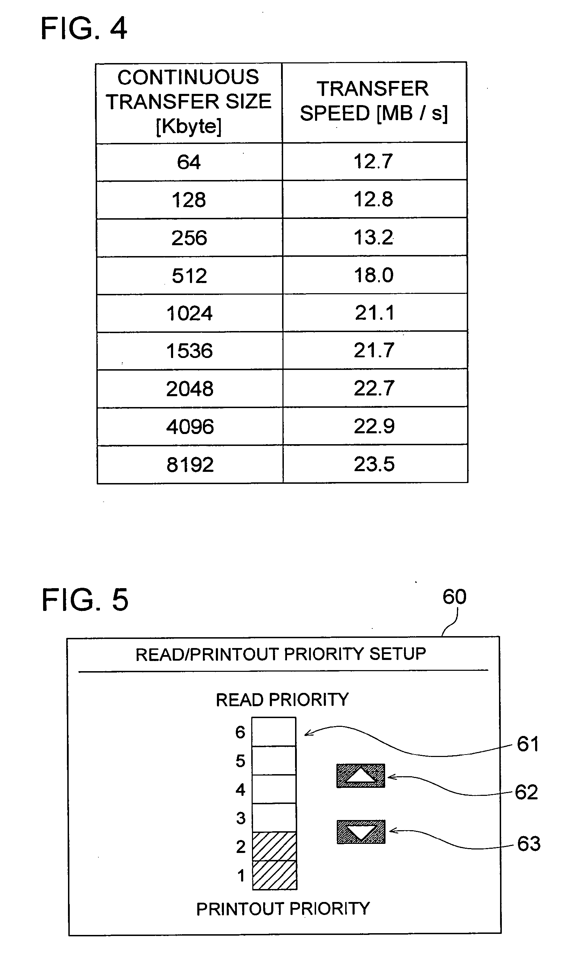

Fig. 3 schematically shows the access to the hard disk apparatus when there is contention between the read and write processing. Fig. 3 (a) is a diagram showing the state of access when the continuous transfer size in the processing shown in Fig. 5 is set to three times the maximum transfer unit. Fig. 3 (b) is the diagram representing the conventional state of access wherein the read processing and write processing are switched for each maximum transfer unit.

In Fig. 3 (a), after the read operation 51 of the maximum transfer unit has been performed three times, head movement 52 starts and the head is fed to the storage position of the image data for the write processing. Then after the write operation 53 has been performed three times at the maximum transfer unit, head movement 54 starts and the head is fed to the storage position of the image data for the read processing. By contrast, in the conventional method shown in Fig. 3 (b), the read operation 51 and write operation 53 is switched alternately for each maximum transfer unit, and head movements 52 and 54 are carried out at every switching.

As shown in Fig. 3 (a), when the read or write processing has started, this processing is performed on an exclusive basis until the access operation for the continuous transfer size terminates. This reduces the number of head movements and improves the transfer rate of input/output data using the hard disk apparatus 16.

Fig. 4 shows the result of measuring the transfer rate for various continuous transfer sizes, as an example. If the continuous transfer size is increased, the transfer rate is gradually improved. This example shows a remarkable effect in the improvement of transfer rate resulting from increased continuous transfer size by the time the continuous transfer size exceeds 1024 Kbytes. The continuous transfer size can be adjusted by changing the set value.

If the set value of the continuous transfer size is provided separately for each of read and write processing in this case, the continuous transfer size for read processing can be made different from that for write processing. This makes it possible to control the ratio of access (occupancy rate) to the hard disk apparatus 16 between the read processing and write processing. To put it another way, which of the process including the write processing and that including the read processing should be given priority, and to what extent this priority should be given at the time of execution can be determined by making adjustment in such a way that the continuous transfer size for read processing is different from that for write processing.

In the copying operation, if the continuous transfer size for write processing is made greater than that for read operation, the document read operation takes priority. If the continuous transfer size for read processing is made greater than that for write operation, the printout operation takes priority.

The image forming apparatus 10 of the present embodiment is designed in such a way that a priority setup screen 60 shown in Fig. 5 is displayed on the operation display section 19, and the user can determined which of document reading operation and print output operation should be given priority, and to what extent this priority should be given at the time of execution. The priority setup screen 60 indicates an indicator 61 showing the priority setup state, an up-arrow key 62 for raising the read operation by one rank, and a down-arrow key 63 for lowering the printout operation by one rank.

This example allows the priority to be adjusted in six steps. When the read operation and printout operation are set to the same level on the list of priority, the continuous transfer size for write processing and that for read processing are both set at four Mbytes. Every time the priority is changed one step, the continuous transfer size is increased or decreased one Mbyte. In Fig. 5, the printout side is set to a level one step higher on the list of priority. Without being restricted to the examples given above, the continuous transfer size and the amount of increase or decrease can be set as appropriate.

The following describes the case where the continuous transfer size is changed in response to the free-space capacity of the buffer memory 22.

In the copying operation, to ensure a smooth document reading operation, the buffer memory 22 is required to ensure a free-space capacity at an appropriate level. If the free-space capacity is not sufficient, the read operation will fail. Similarly, if the image data ready for output is insufficient in the buffer memory 22, the printout operation will fail. To avoid such a problem, the continuous transfer size is changed dynamically in response to the read buffer area (not illustrated) provided on the buffer memory 22 and the printout buffer area, whereby smoother copying operation is performed.

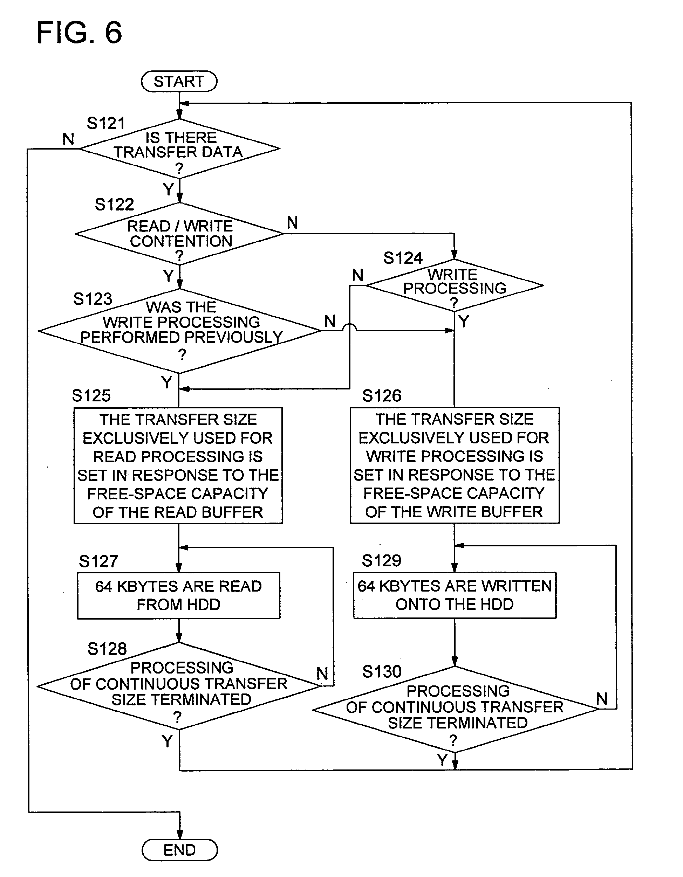

Fig. 6 shows the flow of access control when the continuous transfer size is changed in response to the free-space capacity of the buffer memory. The basic flow is the same as that given in Fig. 2. The difference is the presence of the Step S125 and Step S126 wherein the continuous transfer size is changed in response to the free-space capacity of the buffer memory. For other steps, Steps S121 through S124 correspond to Steps 101 through 104 in Fig. 2, and Steps S127 through S130 correspond to Steps S105 through S108 in Fig. 2

In the processing shown in Fig. 6, the free space of the buffer area in the buffer memory 22 is checked before the read operation of continuous transfer size is performed. Setting is changed in response to the size thereof (Step S125). For example, when the free-space capacity is smaller than a reference level, the continuous transfer size for write operation is increased in order to ensure that the write processing related to the read operation is higher on the list of priority. Conversely, when the free-space capacity is greater than the reference level, the continuous transfer size of the write operation is reduced. Such a control procedure can be used.

Further, the free space of the printout buffer area in the buffer memory 22 is checked before the write operation of continuous transfer size is performed. Setting is changed in response to the size thereof (Step S126). For example, when the free-space capacity is greater than a reference level, the continuous transfer size for read operation is increased in order to ensure that the read processing related to the printout operation is higher on the list of priority. Conversely, when the free-space capacity is smaller than the reference level, the continuous transfer size of the read operation is reduced. Such a control procedure can be used.

Further, continuous transfer size for write operation and that for read operation can be set in response to the ratio between the read rate of the reading section 11 and output rate of the image forming section 12. Further, it is also possible to provide control in such a way that the set value of continuous transfer size is provided for each task. As the task is higher on the list of priority, the continuous transfer size of that task is increased. For example, when there is contention among three tasks, three set values of the continuous transfer size are prepared for these tasks, respectively. When a continuous transfer size is provided for each task, it is possible to cope with the contention between two sets of read processing and contention between two sets of write processing.

The embodiment of the present invention has been described with reference to drawings. A specific embodiment is not restricted to the examples shown above. The present invention can be embodied in variations with appropriate modification or additions, without departing from the technological spirit and scope of the invention claimed.

The aforementioned embodiment has been explained with reference to the copying operation as an example. Without being restricted thereto, the advantages of the present invention are effectively utilized if there is contention among a plurality of operations for the access to the hard disk apparatus 16. Without being restricted to the digital copying machine shown with reference to the embodiment, the present invention can be applied to a facsimile machine, a printer and others wherein image data is stored in a hard disk apparatus.

According to the present embodiment, the following effects can be attained.
(1) A series of image data is stored in the physically continuous region on a disk. At the same time, once the read or write processing starts, the read or write processing is allowed to occupy the access to the hard disk apparatus, until the read or write operation of a predetermined continuous transfer size terminates. Even if there is contention between the read processing and write processing, this arrangement minimizes reduction of the access efficiency, and improves the performance of the system.
(2) When the predetermined size occupying the hard disk apparatus can be set for each task or separately for each of the write and read processing, the ratio of the operations of access to the hard disk apparatus among tasks or the ratio of access operations between the write and read processing, can be controlled by changing the predetermined size. This makes it possible to control the level of priority of the operations of the apparatus involved in the task and processing.

According to the embodiment described in the above, the hard disc drive stores consecutive image data into a physically-continuous region on a hard disc, and when the hard disc drive commences the write processing or the read processing, the data accessing operation for the write processing or the read processing is continued until a predetermined size of data is written or read onto/from the hard disc. Namely, during the time period form the start of the write processing or the read processing to the completion of the writing action or the reading action for the predetermined size of data, the data accessing operation for the write processing or the read processing is continued without being disturbed by other accessing operation. Accordingly, during this time period, since the read/write head only moves along this physically-continuous region, the deterioration of the accessing efficiency caused by the frequent movements of the read/write head can be effectively prevented. Incidentally, the predetermined size of data is set at such a size that is larger than the maximum transferring unit for the hard disc drive, for instance, set at plural times of the maximum transferring unit.

Further, it is possible to set the predetermined size of data for every task. For instance, in the case that the hard disc drive is controlled in such a manner that each of plural tasks accesses the hard disc drive in turn when there is contention of accessing operations to the hard disc drive between the plural tasks, it is possible to control the accessing ratios between the plural tasks for the hard disc drive by varying the predetermined size of data to be allotted to each of the plural tasks.

Also, according to the embodiment described in the above, it becomes possible to respectively establish the first predetermined size and the second predetermined size for the write processing use and for the read processing use, independently relative to each other. For instance, in the case that the hard disc drive is controlled in such a manner that the write processing and the read processing are alternately conducted when there is contention, it is possible to control the accessing ratio (an occupation ratio) between the write processing and the read processing for the hard disc drive by establishing the first predetermined size for the write processing use and the second predetermined size for the read processing use so that both are different from each other.

Further, according to the embodiment, by changing the predetermined size, it is possible to adjust the length of the time period while each of the tasks or each processing occupies the hard disc drive as one routine.

According to the embodiment, by changing the predetermined size, it is possible to adjust the length of the time period while each of the tasks or each processing occupies the hard disc drive as one routine.

According to the embodiment, it is possible for the user to change the setting value of the predetermined size through the operating section. Accordingly, for instance, it becomes possible to determine whether an apparatus operation of the write processing side (for instance, reading operation at the time of copying) should be conducted prior to another apparatus operation of the read processing side (for instance, print outputting operation at the time of copying) or vise versa, and to adjust the degree of its priority, according to the user's requests.

Further, according to the embodiment, the predetermined size is automatically changed corresponding to the priority of the processing. In the embodiment, the term of "the priority of the processing" includes, for instance, a priority of the task to which the read processing and the write processing are belong, a priority of processing based on the free-space capacity of the buffer storage used for the read processing and the free-space capacity of the buffer storage used for the write processing, a priority of processing based on the ratio between the scanner reading velocity and the printing velocity, etc.

According to the embodiment, by changing the relative relationship between great and small sizes in regard to the first predetermined size and the second predetermined size, it is possible to relatively change the priority relationship between the read processing and the write processing.

According to the embodiment, since the predetermined size exceeds a maximum transferable size being transferable at a time from the storage section to the hard disc drive, the transferring operations from the storage section to the hard disc drive are conducted at least two times within one processing routine.

While the preferred embodiments of the present invention have been described using specific term, such description is for illustrative purpose only, and it is to be understood that changes and variations may be made without departing from the spirit and scope of the appended claims.

## Claims

1. An image forming apparatus, comprising:
a hard disc drive to store consecutive image data into a physically-continuous region on a hard disc; and
a controlling section to control data accessing operation for said hard disc drive in such a manner that, with regard to at least a write processing and a read processing if said hard disc drive commences said write processing or said read processing, said data accessing operation for said write processing or said read processing is continued until a predetermined size of data is written onto said hard disc or read from said hard disc;
wherein said predetermined size is established for every task for accessing said hard disc drive.

2. The image forming apparatus of claim 1,
wherein said predetermined size is changeable.

3. An image forming apparatus, comprising:
a hard disc drive to store consecutive image data into a physically-continuous region on a hard disc; and
a controlling section to control data accessing operation for said hard disc drive in such a manner that, if said hard disc drive commences a write processing, said data accessing operation for said write processing is continued until a first predetermined size of data is written onto said hard disc, while, when said hard disc drive commences a read processing, said data accessing operation for said read processing is continued until a second predetermined size of data is read from said hard disc;
wherein said first predetermined size and said second predetermined size are respectively established for said write processing use and for said read processing use.

4. The image forming apparatus of claim 3,
wherein said first predetermined size and said second predetermined size are changeable.

5. An image forming apparatus, comprising:
a hard disc drive to store consecutive image data into a physically-continuous region on a hard disc; and
a controlling section to control data accessing operation for said hard disc drive in such a manner that, with regard to at least a write processing and a read processing if said hard disc drive commences said write processing or said read processing, said data accessing operation for said write processing or said read processing is continued until a predetermined size of data is written onto said hard disc or read from said hard disc;
wherein said predetermined size is changeable.

6. The image forming apparatusof any one of claims 2, 4 and 5, further comprising:
an inputting section to input said predetermined size.

7. The image forming apparatus of claim 6,
whrein said inputting section includes an operating section to be operated by a user.

8. The image forming apparatus of any one of claims 1 - 7,
wherein said predetermined size is made to be changed corresponding to a priority of said data accessing operation.

9. The image forming apparatus of claim 8,
wherein a relative relationship between great and small sizes in regard to said first predetermined size and said second predetermined size is changeable, corresponding to said priority of said data accessing operation.

10. The image forming apparatus of any one of claims 1 - 9, further comprising:
a storage section to store said consecutive image data read from said hard disc drive; and
an outputting section to output said consecutive image data read from said storage section;
wherein said controlling section changes said predetermined size, corresponding to a free-space capacity of said storage section.

11. The image forming apparatus of any one of claims 1 - 10, further comprising:
an inputting section to input said consecutive image data; and
a storage section to store said consecutive image data inputted from said inputting section;
wherein said controlling section controls said data accessing operation for said hard disc drive so that said consecutive image data stored in said storage section are transferred into said hard disc drive; and
wherein said controlling section changes said predetermined size, corresponding to a free-space capacity of said storage section.

12. The image forming apparatus of claim 11,
whrein said predetermined size exceeds a maximum transferable size, which is defined as a maximum data size being transferable at a time from said storage section to said hard disc drive.

13. The image forming apparatus of any one of claims 1 - 10, further comprising:
an inputting section to input said consecutive image data; and
a storage section to store said consecutive image data inputted from said inputting section;
wherein said predetermined size exceeds a maximum transferable size, which is defined as a maximum data size being transferable at a time from said storage section to said hard disc drive.

14. An image forming apparatus, comprising:
a hard disc drive to store consecutive image data into a physically-continuous region on a hard disc;
an inputting section to input said consecutive image data;
a storage section to store said consecutive image data inputted from said inputting section; and
a controlling section to control data accessing operation for said hard disc drive in such a manner that, with regard to at least a write processing and a read processing if said hard disc drive commences said write processing or said read processing, said data accessing operation for said write processing or said read processing is continued until a predetermined size of data is written onto said hard disc or read from said hard disc;
wherein said predetermined size exceeds a maximum transferable size, which is defined as a maximum data size being transferable at a time from said storage section to said hard disc drive.
